# EUROPÄISCHE PATENTSCHRIFT

(11) **EP 1 950 861 B1**
(45) Veröffentlichungstag und Bekanntmachung des Hinweises auf die Patenterteilung: **12.05.2010**
(21) Anmeldenummer: 08100317.0
(22) Anmeldetag: 10.01.2008
(51) Int. Cl.: H02H 7/125, H02J 7/00, B60R 16/023

(54) **Kraftfahrzeugbordnetz mit Verpoldetektor**
Motor vehicle electrical system with polarity reversal detector
Réseau de bord de véhicule automobile doté d'un détecteur d'inversion de polarité

(30) Priorität: 24.01.2007 DE 102007003545
(43) Veröffentlichungstag der Anmeldung: 30.07.2008
(73) Patentinhaber: ROBERT BOSCH GMBH, 70442 Stuttgart (DE)
(72) Erfinder: Liebstueckel, Steffen, 71638 Ludwigsburg (DE); Labitzke, Herbert, 71706 Markgroeningen (DE); Suelzle, Helmut, 71691 Freiberg (DE)

(56) Entgegenhaltungen:
- DE-A1- 10 344 182
- US-A- 4 247 813

## Beschreibung

Die Erfindung betrifft ein Kraftfahrzeugbordnetz mit einem Verpoldetektor.

### Stand der Technik

Aus der DE 2 147 695 A1 ist eine Batterieladeeinrichtung mit einer Verpolschutzvorrichtung für Fahrzeuge bekannt. Bei dieser bekannten Batterieladevorrichtung ist die positive Anschlussklemme der Batterie unmittelbar mit der positiven Anschlussklemme des Generators verbunden. Die negative Anschlussklemme des Generators ist ebenso wie die negative Anschlussklemme der Batterie mit Masse verbunden. Bei derartigen Anordnungen besteht die Gefahr, dass bei einem mit falscher Polarität erfolgten Anschluss der Batterie an den Generator ein hoher Kurzschlussstrom über die zum Gleichrichten der Generatorausgangsleistung vorgesehenen Dioden fließt und diese ebenso wie eventuell weitere Teile der Anlage zerstört. Um dies zu verhindern, ist wenigstens einer Gleichstromanschlussklemme des Generators eine Verpolschutzvorrichtung zugeordnet, welche eine Sicherung enthält, die bei einem mit verkehrter Polarität erfolgten Anschluss der Batterie an die Gleichstromanschlussklemmen des Generators durchschmilzt und den Kurzschlussstrom unterbricht. Die Sicherung kann über eine Zusatzdiode angeschlossen sein, so dass der Last-Gleichrichtersatz auch nicht während des Durchschmelzens der Sicherung vom Kurzschlussstrom durchflossen ist.

Aus der DE 30 30 700 C2 ist ein Batterieladesystem bekannt, bei welchem ein verpoltes Anklemmen der Batterie unwiderlegbar nachgewiesen werden kann. Dieses bekannte System weist einen Wechselstromgenerator, einen dem Generator nachgeschalteten Gleichrichter, eine anklemmbare Batterie und eine Diode auf. Die Diode ist zum Erkennen einer Verpolung der Batterie parallel zum Gleichspannungsausgang des Generators in Sperrrichtung geschaltet und in ihrer Leistung derart bemessen, dass sie im Falle eines Anschlusses der Batterie mit verkehrter Polung sofort zerstört wird.

Aus der DE 103 44 182 A1 ist ein Kraftfahrzeugbordnetz bekannt, mit einem Wechselstromgenerator, einem mit dem Wechselstromgenerator verbundenen Gleichrichter, einer mit den Ausgangsanschlüssen des Gleichrichters verbundenen Batterie und einem mit der Batterie verbundenen Verpoldetektor. Der Verpoldetektor umfasst eine Diode und ein in Reihe zur Diode geschaltetes Schwellenwertelement.

### Vorteile der Erfindung

Ein Kraftfahrzeugbordnetz mit den im Anspruch 1 angegebenen Merkmalen weist demgegenüber den Vorteil auf, dass durch die Verwendung eines speziellen Schwellenelements, insbesondere einer Zenerdiode eine Filterung in dem Sinne erfolgt, dass nicht jedwede Störung ein Ansprechen des Verpoldetektors verursachen kann. Insbesondere werden durch die Verwendung eines Schwellenwertelementes niederenergetische Spannungsspitzen und andere Störungen unterdrückt, die nicht auf eine Verpolung zurückzuführen sind.

Weitere vorteilhafte Eigenschaften eines erfindungsgemäßen Kraftfahrzeugbordnetzes bestehen darin, dass ein beim Anschließen der Batterie auftretendes Verpolen erkannt und gespeichert wird, so dass diese Information zu einem späteren Zeitpunkt zur Verfügung steht und damit eventuelle unberechtigte Kundenforderungen hinsichtlich einer Gewährleistung bzw. Kostenübernahme abgewiesen werden können. Derartige unberechtigte Kundenforderungen liegen beispielsweise vor, wenn eine Überprüfung ergibt, dass der Signalpfad, in welchem die Diode und das Schwellenwertelement angeordnet sind, unterbrochen ist. Bei einer anderen Ausführungsform der Erfindung können unberechtigte Kundenforderungen daran erkannt werden, dass in demjenigen Signalpfad, in welchem die Diode und das Schwellenwertelement angeordnet sind, das Schwellenwertelement selbst zerstört ist.

Gemäß einer vorteilhaften Weiterbildung ist in Reihe zur Diode und zum Schwellenwertelement ein Nachweiselement vorgesehen, welches seinerseits Filterfunktion hat. Dies erhöht die Sicherheit eines ungewollten Auslösens des Nachweiselementes und damit des gesamten Verpoldetektors.

Weitere vorteilhafte Eigenschaften der Erfindung ergeben sich aus deren beispielhafter Erläuterung anhand der Figuren.

### Zeichnung

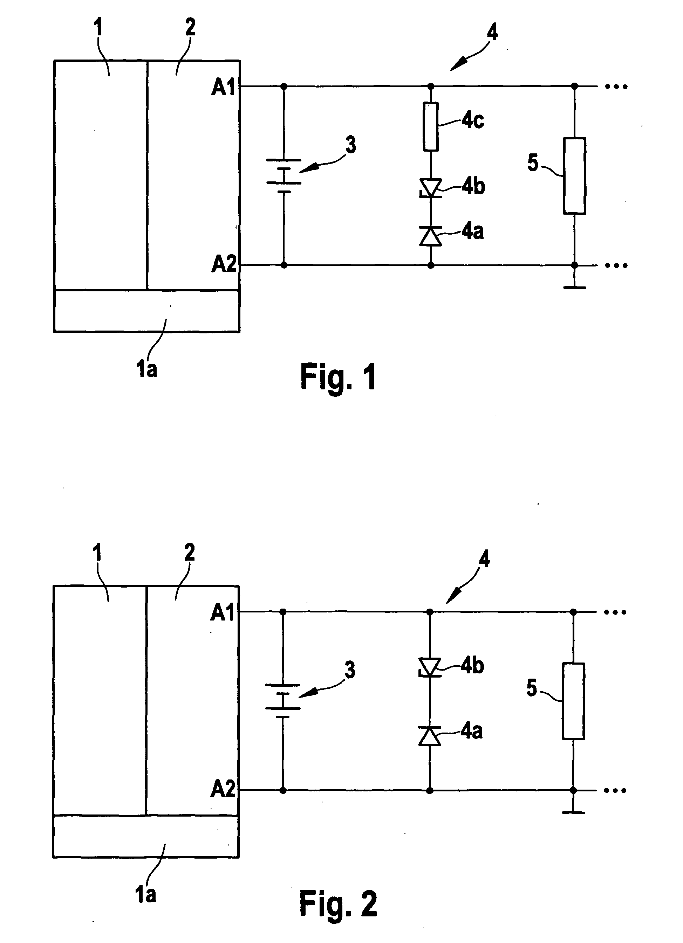

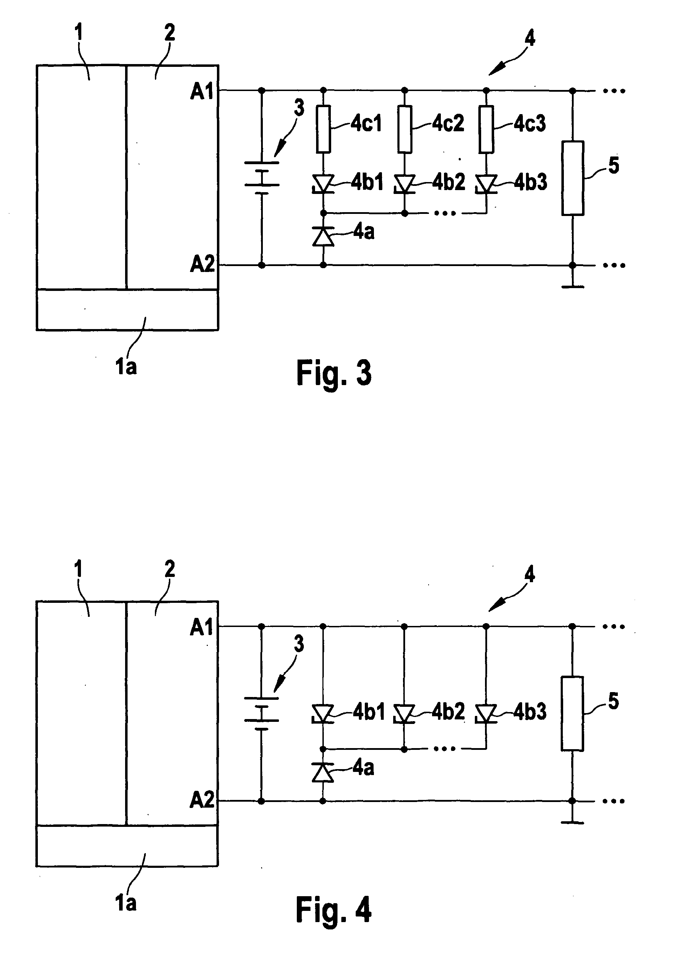

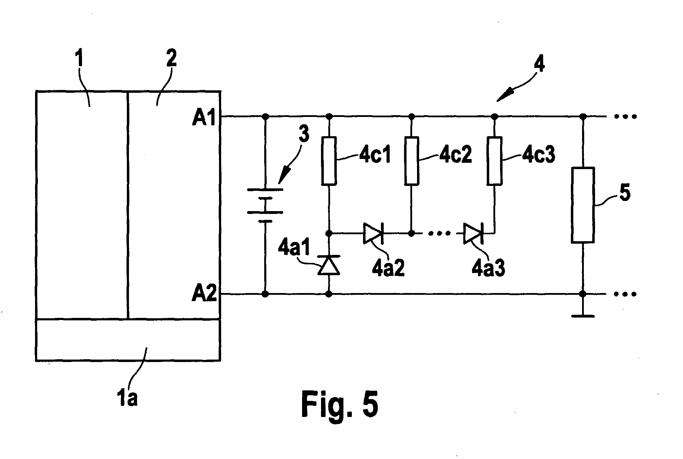

Die Figur 1 zeigt ein erstes Ausführungsbeispiel für ein Kraftfahrzeugbordnetz gemäß der Erfindung. Die Figur 2 zeigt ein zweites Ausführungsbeispiel für ein Kraftfahrzeugbordnetz gemäß der Erfindung. Die Figur 3 zeigt ein drittes Ausführungsbeispiel für ein Kraftfahrzeugbordnetz gemäß der Erfindung. Die Figur 4 zeigt ein viertes Ausführungsbeispiel für ein Kraftfahrzeugbordnetz gemäß der Erfindung. Die Figur 5 zeigt ein fünftes Ausführungsbeispiel für ein Kraftfahrzeugbordnetz gemäß der Erfindung.

### Beschreibung

Die Figur 1 zeigt ein erstes Ausführungsbeispiel für ein Kraftfahrzeugbordnetz gemäß der Erfindung. Das dargestellte Kraftfahrzeugbordnetz weist einen Wechselstromgenerator 1, einen Gleichrichter 2, einen Generatorregler 1a, eine Batterie 3, einen Verpoldetektor 4 und Verbraucher 5 auf.

Der Gleichrichter 2 ist zur Gleichrichtung der vom Wechselstromgenerator 1 erzeugten Wechselspannungen vorgesehen und stellt an seinem Ausgang A1 eine positive Gleichspannung und an seinem Ausgang A2 ein Massesignal zur Verfügung.

Die am Ausgang A1 des Gleichrichters bereitgestellte positive Gleichspannung liegt auch am Pluspol der Batterie 3, am massefernen Anschluss des Verpoldetektors 4 und am massefernen Anschluss der Verbraucher 5 an. Der Ausgang A2 des Gleichrichters 2 ist mit dem Minuspol der Batterie 3, dem anderen Anschluss des Verpoldetektors 4 und dem anderen Anschluss der Verbraucher 5 verbunden.

Der Verpoldetektor 4 weist ein Nachweiselement 4c, ein Schwellenwertelement 4b und eine Diode 4a auf, wobei diese Elemente in Reihe geschaltet sind. Das Schwellenwertelement 4b ist vorzugsweise in Form einer Zenerdiode realisiert. Die Anode der Diode 4a ist mit dem Ausgang A2 des Gleichrichters 2 und folglich auch mit Masse verbunden. Die Kathode der Diode 4a ist mit der Kathode der Zenerdiode 4b verbunden. Die Anode der Zenerdiode 4b steht über das Nachweiselement 4c mit dem Ausgang A1 des Gleichrichters 2 in Verbindung. Bei dem Nachweiselement 4c, durch das nachträglich eine erfolgte Verpolung nachgewiesen werden kann, handelt es sich beispielsweise um eine Sicherung, einen Bonddraht, eine Diode, ein chemisches Anzeigeelement, ein optisches Anzeigeelement, eine geeignet dimensionierte Leiterbahn auf einer Leiterplatte oder in einem ASIC, ein pyrotechnisches Element, ein thermisches Element oder ein anderes elektrisches Bauelement.

Im bestimmungsgemäßen Betrieb des dargestellten Kraftfahrzeugbordnetzes verhindert die Diode 4a einen Stromfluss durch den Verpoldetektor 4, da sie in Sperrrichtung geschaltet ist.

Liegt hingegen eine Verpolung vor und ist die dadurch entstehende negative Spannung größer als die Summe aus der Flussspannung der Diode 4a und der Zenerspannung der Zenerdiode 4b, dann wird der Nachweispfad freigegeben und es fließt ein Strom durch das Nachweiselement 4c, so dass das Nachweiselement auslöst.

Dieses Nachweiselement 4c ist in vorteilhafter Weise so ausgestaltet, dass es eine Filterfunktion hat. Beispielsweise kann das Nachweiselement 4c eine vorgegebene Stromtragfähigkeit aufweisen. Diese besondere Auslegung des Nachweiselementes bewirkt, dass das Nachweiselement und damit der Verpoldetektor in seiner Gesamtheit nicht bei jedweder Störung auslöst. Vielmehr werden insbesondere Störungen und niederenergetische Spannungen, die nicht auf eine Verpolung zurückzuführen sind, ausgefiltert bzw. unterdrückt.

Im Falle einer Verpolung kommt es - wie bereits oben ausgeführt wurde - zu einem Auslösen des Nachweiselementes 4c. Dieser Zustand, der beispielsweise in einer Unterbrechung des Nachweispfades liegt, wird gespeichert und steht damit zu einem späteren Zeitpunkt als Nachweis für die erfolgte Verpolung zur Verfügung. Dieser Nachweis kann durch eine Prüfung des Detektionspfades geführt werden. Unter Umständen kann dazu ein Abtrennen weiterer elektrischer Komponenten notwendig ein. Beim Auslösen des Nachweiselementes 4c bleibt die Diode 4a intakt.

Durch die Verwendung der Zenerdiode 4b und die jeweilige Auslegung des Nachweiselementes 4c wird nach alledem erreicht, dass eine negative Spannung, welche größer ist als ein definierter Schwellenwert und welche für eine definierte Mindestzeit vorliegt, erkannt wird und dass dieses Ereignis nicht reversibel gespeichert wird.

Die Figur 2 zeigt ein zweites Ausführungsbeispiel für ein Kraftfahrzeugbordnetz gemäß der Erfindung. Dieses zweite Ausführungsbeispiel unterscheidet sich von dem in der Figur 1 gezeigten ersten Ausführungsbeispiel durch eine veränderte Ausgestaltung des Verpoldetektors 4. Dieser weist gemäß dem zweiten Ausführungsbeispiel ein Schwellenwertelement 4b und eine Diode 4a auf, wobei diese Elemente in Reihe geschaltet sind. Das Schwellenwertelement 4b ist auch hier vorzugsweise in Form einer Zenerdiode realisiert. Die Anode der Diode 4a ist mit dem Ausgang A2 des Gleichrichters 2 und folglich auch mit Masse verbunden. Die Kathode der Diode 4a ist mit der Kathode der Zenerdiode 4b verbunden. Die Anode der Zenerdiode 4b steht direkt mit dem Ausgang A1 des Gleichrichters 2 in Verbindung.

Im bestimmungsgemäßen Betrieb des dargestellten Kraftfahrzeugbordnetzes verhindert auch bei diesem Ausführungsbeispiel die Diode 4a einen Stromfluss durch den Verpoldetektor 4, da sie in Sperrrichtung geschaltet ist.

Liegt hingegen eine Verpolung vor und ist die dadurch entstehende negative Spannung größer als die Summe aus der Flussspannung der Diode 4a und der Zenerspannung der Zenerdiode 4b, dann wird der Nachweispfad freigegeben. Der dann fließende Strom zerstört die Zenerdiode 4b.

Auch bei dieser Ausführungsform beeinflusst die Zenerdiode die Höhe der negativen Spannung, ab welcher ausgelöst wird. Des Weiteren kann die Zenerdiode mit einer definierten geringen Stromtragfähigkeit ausgestattet sein. Dadurch wird die zum Auslösen bzw. zum Zerstören der Zenerdiode benötigte Energie festgelegt. Dies entspricht einer Filterfunktion der Zenerdiode. Diese Filterfunktion hat zur Folge, dass nicht jedwede Störung und jedwede niederenergetische Spannung zum Auslösen des Verpoldetektors 4 führt.

Im Falle einer Verpolung kommt es - wie bereits oben ausgeführt wurde - zu einem Auslösen des Verpoldetektors, wobei die Zenerdiode zerstört wird. Dieser Zustand ist nicht reversibel und steht somit zu einem späteren Zeitpunkt als Nachweis für die erfolgte Verpolung zur Verfügung. Dieser Nachweis kann dadurch geführt werden, dass die erfolgte Unterbrechung des Detektionspfades und auch die Zerstörung der Zenerdiode aufgezeigt wird.

Durch die Verwendung der Zenerdiode und deren Auslegung wird nach alledem erreicht, dass eine negative Spannung, welche größer ist als ein definierter Schwellenwert und welche für eine definierte Mindestzeit vorliegt, erkannt wird und dass dieses Ereignis nicht reversibel gespeichert wird.

Die Figur 3 zeigt ein drittes Ausführungsbeispiel für ein Kraftfahrzeugbordnetz gemäß der Erfindung. Dieses dritte Ausführungsbeispiel unterscheidet sich von dem in der Figur 1 gezeigten ersten Ausführungsbeispiel durch eine geänderte Ausgestaltung des Verpoldetektors 4. Dieser weist gemäß dem dritten Ausführungsbeispiel eine Reihenschaltung aus einer Parallelschaltung und einer Diode 4a auf. Die Parallelschaltung weist n parallele Zweige auf, wobei im gezeigten Ausführungsbeispiel n=3 ist. Der erste Zweig dieser Parallelschaltung enthält eine Reihenschaltung aus einem Schwellenwertelement 4b1 und einem Nachweiselement 4c1, wobei es sich beim Schwellenwertelement 4b1 vorzugsweise um eine Zenerdiode handelt. Der zweite Zweig dieser Parallelschaltung enthält eine Reihenschaltung aus einem Schwellenwertelement 4b2 und einem Nachweiselement 4c2, wobei es sich beim Schwellenwertelement 4b2 vorzugsweise um eine Zenerdiode handelt. Der dritte Zweig dieser Parallelschaltung enthält eine Reihenschaltung aus einem Schwellenwertelement 4b3 und einem Nachweiselement 4c3, wobei es sich beim Schwellenwertelement 4b3 vorzugsweise um eine Zenerdiode handelt. Die Zenerspannungen der Zenerdioden 4b1, 4b2 und 4b3 sind unterschiedlich bemessen, so dass in den verschiedenen Zweigen der Parallelschaltung unterschiedliche Auslöseschwellenwerte vorliegen.

Im Falle einer Verpolung der Batterie ist die vorliegende negative Spannung sowie der Energieinhalt so groß, dass die Nachweiselemente in allen Zweigen ansprechen. Dieser Zustand wird nicht reversibel gespeichert, so dass er zu einem späteren Nachweis für eine erfolgte Verpolung verwendet werden kann. Die Diode 4a bleibt intakt.

Treten hingegen negative Spannungen kleinerer Amplitude und kleineren Energieinhaltes auf, die nicht auf ein Verpolen zurückzuführen sind, dann kann dies beispielsweise dazu führen, dass eines oder zwei der Nachweiselemente auslösen, das oder die weiteren Nachweiselemente jedoch nicht. Auch dieses Auslösen von nur einem oder zwei der drei Nachweiselemente wird nicht reversibel gespeichert und steht somit für einen späteren Nachweis zur Verfügung. Dies ermöglicht Rückschlüsse auf die Höhe der negativen Spannung und somit möglicherweise auf die Ursache von aufgetretenen Störungen.

Auch bei diesem Ausführungsbeispiel sind die Nachweiselemente 4c1, 4c2 und 4c3 in vorteilhafter Weise so ausgestaltet, dass sie jeweils eine Filterfunktion haben. Beispielsweise können sie vorgegebne Stromtragfähigkeiten aufweisen. Diese besondere Ausgestaltung der Nachweiselemente bewirkt, dass lediglich negative Spannungen, die einen vorgegebenen Mindestenergieinhalt aufweisen, zu einem Auslösen des jeweiligen Nachweiselementes führen.

Die Figur 4 zeigt ein viertes Ausführungsbeispiel für ein Kraftfahrzeugbordnetz gemäß der Erfindung. Dieses vierte Ausführungsbeispiel unterscheidet sich von dem in der Figur 2 gezeigten zweiten Ausführungsbeispiel durch eine veränderte Ausgestaltung des Verpoldetektors 4. Dieser weist gemäß dem vierten Ausführungsbeispiel eine Reihenschaltung aus einer Parallelschaltung und einer Diode 4a auf. Die Parallelschaltung weist n parallele Zweige auf, wobei im gezeigten Ausführungsbeispiel n=3 ist. Die drei parallelen Zweigen weisen jeweils ein Schwellenwertelement auf, bei dem es sich beim gezeigten Ausführungsbeispiel um eine Zenerdiode handelt. So ist im ersten Zweig eine Zenerdiode 4b1, im zweiten Zweig eine Zenerdiode 4b2 und im dritten Zweig eine Zenerdiode 4b3 vorgesehen. Die Zenerspannungen dieser Zenerdioden sind unterschiedlich bemessen, so dass in den verschiedenen Zweigen der Parallelschaltung unterschiedliche Auslöseschwellenwerte vorliegen.

Im Falle einer Verpolung der Batterie ist die vorliegende negative Spannung sowie der Energieinhalt so groß, dass die als Nachweiselemente dienenden Zenerdioden in allen Zweigen zerstört werden. Dieser Zustand bleibt nicht reversibel gespeichert, so dass er zu einem späteren Zeitpunkt als Nachweis für eine erfolgte Verpolung verwendet werden kann. Die Diode 4a bleibt intakt.

Die genannten Zenerdioden sind so ausgestaltet, dass sie auch eine Filterfunktion haben. Beispielsweise können sie vorgegebene Stromtragfähigkeiten aufweisen. Diese besondere Auslegung der Zenerdioden bewirkt, dass lediglich negative Spannungen, die eine vorgegebene Mindestamplitude und einen vorgegebenen Mindestenergieinhalt aufweisen, zu einem Auslösen bzw. einer Zerstörung der jeweiligen Zenerdiode führen.

Treten kleinere negative Spannungen sowie Spannungen kleineren Energieinhalts auf, die nicht auf ein Verpolen zurückzuführen sind, dann kann dies beispielsweise dazu führen, dass eine oder zwei der Zenerdioden zerstört werden und die weitere bzw. weiteren Zenerdioden intakt bleiben. Auch diese Zerstörung von nur einer oder zwei der Zenerdioden bleibt nicht reversibel gespeichert und steht für einen späteren Nachweis zur Verfügung. Dies ermöglicht Rückschlüsse auf die Höhe der negativen Spannung und somit möglicherweise auf die Ursache von aufgetretenen Störungen.

Die Figur 5 zeigt ein fünftes Ausführungsbeispiel für ein Kraftfahrzeugbordnetz gemäß der Erfindung. Dieses fünfte Ausführungsbeispiel unterscheidet sich von den in den Figuren 1 - 4 gezeigten Ausführungsbeispielen durch eine veränderte Ausgestaltung des Verpoldetektors 4. Dieser weist gemäß dem fünften Ausführungsbeispiel Dioden 4a1, 4a2 und 4a3 sowie Nachweiselemente 4c1, 4c2 und 4c3 auf. Die Anode der Diode 4a1 ist mit dem Ausgang A2 des Gleichrichters 2 und folglich auch mit Masse verbunden. Die Kathode der Diode 4a1 ist über das Nachweiselement 4c1 mit dem Ausgang A1 des Gleichrichters 2 verbunden und steht weiterhin mit der Anode der Diode 4a2 in Verbindung. Die Kathode der Diode 4a2 ist über das Nachweiselement 4c2 an den Ausgang A1 des Gleichrichters 2 angeschlossen und ist des Weiteren mit der Anode der Diode 4a3 kontaktiert. Die Kathode der Diode 4a3 ist über das Nachweiselement 4c3 mit dem Ausgang A1 des Gleichrichters 2 verbunden.

Im bestimmungsgemäßen Betrieb des dargestellten Kraftfahrzeugbordnetzes verhindern die Dioden 4a1, 4a2 und 4a3 einen Stromfluss durch den Verpoldetektor 4, da sie in Sperrrichtung geschaltet sind. Liegt hingegen eine Verpolung vor, dann lösen in Abhängigkeit von der Höhe der negativen Spannung eines, mehrere oder alle der Nachweiselemente aus. Die Anzahl der ausgelösten Nachweiselemente kann zu einem späteren Nachweis für die Höhe der negativen Spannung verwendet werden. Die Elemente des Verpoldetektors 4 sind derart ausgelegt, dass im Falle einer Verpolung stets das jeweilige Nachweiselement anspricht und es zu keiner Zerstörung der Dioden kommt. Die Nachweiselemente sind auch bei diesem Ausführungsbeispiel so ausgestaltet, dass sie eine Filterfunktion haben. Beispielsweise können die Nachweiselemente eine vorgegebene Stromtragfähigkeit aufweisen. Diese besondere Auslegung der Nachweiselemente bewirkt, dass der Verpoldetektor nicht bei jedweder Störung auslöst, sondern erst dann, wenn die auftretende Energie einen vorgegebenen Schwellenwert überschreitet.

Bei den oben beschriebenen Ausführungsbeispielen ist der Verpoldetektor stets als eigenständiges Bauteil zwischen der Batterie 3 und den Verbrauchern 5 positioniert. Eine alternative Ausführungsform besteht darin, den Generatorregler 1a als ASIC zu realisieren und den Verpoldetektor in diesen ASIC zu integrieren.

## Patentansprüche

1. Kraftfahrzeugbordnetz, welches aufweist:
- einen Wechselstromgenerator (1),
- einen mit dem Wechselstromgenerator (1) verbundenen Gleichrichter (2),
- eine mit den Ausgangsanschlüssen (A1, A2) des Gleichrichters (2) verbundene Batterie (3),
- einen mit der Batterie (3) verbundenen Verpoldetektor (4), der eine Diode (4a)
- und ein in Reihe zur Diode (4a) geschaltetes Schwellenwertelement aufweist,
- **dadurch gekennzeichnet, dass** das Schwellenwertelement wenigstens eine Zenerdiode (4b) ist.

2. Kraftfahrzeugbordnetz nach Anspruch 1, **dadurch gekennzeichnet, dass** die Zenerdiode (4b) und die Diode (4a) derart dimensioniert sind, dass im Falle einer Verpolung die Zenerdiode (4b) zerstört wird, während die Diode (4a) intakt bleibt.

3. Kraftfahrzeugbordnetz nach Anspruch 1, **dadurch gekennzeichnet, dass** das Schwellenwertelement mehrere parallel geschaltete Zenerdioden (4b1, 4b2, 4b3) aufweist, wobei diese Zenerdioden (4b1, 4b2, 4b3) unterschiedliche Zenerspannungen aufweisen.

4. Kraftfahrzeugbordnetz nach Anspruch 3, **dadurch gekennzeichnet, dass** die Zenerdioden (4b1, 4b2, 4b3) und die Diode 4a derart dimensioniert sind, dass im Falle einer Verpolung die Zenerdioden (4b1, 4b2, 4b3) zerstört werden, während die Diode (4a) intakt bleibt.

5. Kraftfahrzeugbordnetz nach einem der vorhergehenden Ansprüche, **dadurch gekennzeichnet, dass** das Schwellenwertelement eine Filterfunktion aufweist.

6. Kraftfahrzeugbordnetz nach einem der vorhergehenden Ansprüche, **dadurch gekennzeichnet, dass** ein Nachweiselement (4c) oder Nachweiselemente (4c1, 4c2, 4c3) in Reihe zur Zenerdiode (4b) oder den Zenerdioden (4b1, 4b2, 4b3) des Schwellenwertelements geschaltet ist oder sind.

7. Kraftfahrzeugbordnetz nach Anspruch 6, **dadurch gekennzeichnet, dass** das Nachweiselement (4c; 4c1, 4c2, 4c3) eine Filterfunktion hat.

8. Kraftfahrzeugbordnetz nach einem der vorhergehenden Ansprüche, **dadurch gekennzeichnet, dass** die Diode (4a), die Zenerdiode (4b,4b1, 4b2, 4b3) und das Nachweiselement oder die Nachweiselemente (4c; 4c1, 4c2, 4c3) derart dimensioniert sind, dass im Falle einer Verpolung das Nachweiselement (4c; 4c1, 4c2, 4c3) anspricht und die Diode (4a) und die Zenerdiode (4b, 4b1, 4b2, 4b3) intakt bleiben.

9. Kraftfahrzeugbordnetz nach einem der vorhergehenden Ansprüche, **dadurch gekennzeichnet, dass** das Nachweiselement oder die Nachweiselemente (4c; 4c1, 4c2, 4c3) eine Sicherung, ein Bonddraht, eine Diode, ein chemisches Anzeigeelement, ein optisches Anzeigeelement, eine Leiterbahn, ein pyrotechnisches Element oder ein thermisches Element ist oder sind.

10. Kraftfahrzeugbordnetz nach einem der vorhergehenden Ansprüche, **dadurch gekennzeichnet, dass** der Verpoldetektor (4) eine Reihenschaltung aus der Diode (4a) und einer Parallelschaltung aufweist, wobei die Parallelschaltung mehrere Zweige aufweist, die jeweils aus einer Reihenschaltung eines Schwellenwertelementes und wenigstens eines Nachweiselementes (4c; 4c1, 4c2, 4c3) bestehen, dass die Schwellenwertelemente Zenerdioden (4b1, 4b2, 4b3) sind, dass die Zenerdioden (4b1, 4b2, 4b3) unterschiedliche Zenerspannungen aufweisen, und dass die Nachweiselemente (4c; 4c1, 4c2, 4c3) jeweils eine Filterfunktion haben.

11. Kraftfahrzeugbordnetz nach einem der vorhergehenden Ansprüche, **dadurch gekennzeichnet, dass** der Verpoldetektor (4) Bestandteil des Generatorreglers ist.

12. Kraftfahrzeugbordnetz, welches aufweist:
- einen Wechselstromgenerator (1),
- einen mit dem Wechselstromgenerator (1) verbundenen Gleichrichter (2),
- eine mit den Ausgangsanschlüssen (A1, A2) des Gleichrichters (2) verbundene Batterie (3),
- einen mit der Batterie (3) verbundenen Verpoldetektor (4), der wenigstens eine Diode und ein Schwellenwertelement umfasst,
- **dadurch gekennzeichnet, dass** der Verpoldetektor (4) Dioden (4a1, 4a2, 4a3) sowie Nachweiselemente (4c1, 4c2 4c3) aufweist, wobei die Anode der Diode (4a1) ist mit dem Ausgang (A2) des Gleichrichters (2) und mit Masse verbunden ist und die Kathode der Diode (4a1) über das Nachweiselement (4c1) mit dem Ausgang (A1) des Gleichrichters (2) verbunden ist und weiterhin mit der Anode der Diode (4a2) in Verbindung steht und die Kathode der Diode (4a2) über das Nachweiselement (4c2) an den Ausgang (A1) des Gleichrichters (2) angeschlossen ist und mit der Anode der Diode (4a3) kontaktiert ist und die Kathode der Diode (4a3) über das Nachweiselement (4c3) mit dem Ausgang (A1) des Gleichrichters (2) verbunden ist.

## Claims

1. On-board motor-vehicle electrical system, which has:
- an AC generator (1),
- a rectifier (2) which is connected to the AC generator (1),
- a battery (3) which is connected to the output connections (A1, A2) of the rectifier (2),
- a polarity-reversal detector (4) which is connected to the battery (3) and has a diode (4a)
- and a threshold value element which is connected in series with the diode (4a),
- **characterized in that** the threshold value element is at least one Zener diode (4b).

2. On-board motor-vehicle electrical system according to Claim 1, **characterized in that** the Zener diode (4b) and the diode (4a) are dimensioned in such a way that, in the event of polarity reversal, the Zener diode (4b) is destroyed while the diode (4a) remains intact.

3. On-board motor-vehicle electrical system according to Claim 1, **characterized in that** the threshold value element has a plurality of Zener diodes (4b1, 4b2, 4b3) which are connected in parallel, with these Zener diodes (4b1, 4b2, 4b3) having different Zener voltages.

4. On-board motor-vehicle electrical system according to Claim 3, **characterized in that** the Zener diodes (4b1, 4b2, 4b3) and the diode (4a) are dimensioned in such a way that, in the event of polarity reversal, the Zener diodes (4b1, 4b2, 4b3) are destroyed, while the diode (4a) remains intact.

5. On-board motor-vehicle electrical system according to one of the preceding claims, **characterized in that** the threshold value element has a filter function.

6. On-board motor-vehicle electrical system according to one of the preceding claims, **characterized in that** a detection element (4c) or detection elements (4c1, 4c2, 4c3) is/are connected in series with the Zener diode (4b) or the Zener diodes (4b1, 4b2, 4b3) of the threshold value element.

7. On-board motor-vehicle electrical system according to Claim 6, **characterized in that** the detection element (4c; 4c1, 4c2, 4c3) has a filter function.

8. On-board motor-vehicle electrical system according to one of the preceding claims, **characterized in that** the diode (4a), the Zener diode (4b; 4b1, 4b2, 4b3) and the detection element or the detection elements (4c; 4c1, 4c2, 4c3) are dimensioned in such a way that, in the event of polarity reversal, the detection element (4c; 4c1, 4c2, 4c3) responds and the diode (4a) and the Zener diode (4b; 4b1, 4b2, 4b3) remain intact.

9. On-board motor-vehicle electrical system according to one of the preceding claims, **characterized in that** the detection element or the detection elements (4c; 4c1, 4c2, 4c3) is/are a fuse, a bonding wire, a diode, a chemical display element, an optical display element, a conductor track, a pyrotechnic element or a thermal element.

10. On-board motor-vehicle electrical system according to one of the preceding claims, **characterized in that** the polarity-reversal detector (4) has a series circuit comprising the diode (4a) and a parallel circuit, with the parallel circuit having a plurality of branches which each comprise a series circuit comprising a threshold value element and at least one detection element (4c; 4c1, 4c2, 4c3), **in that** the threshold value elements are Zener diodes (4b1, 4b2, 4b3), **in that** the Zener diodes (4b1, 4b2, 4b3) have different Zener voltages, and **in that** the detection elements (4c; 4c1, 4c2, 4c3) each have a filter function.

11. On-board motor-vehicle electrical system according to one of the preceding claims, **characterized in that** the polarity-reversal detector (4) is a constituent part of the generator controller.

12. On-board motor-vehicle electrical system which has:
- an AC generator (1),
- a rectifier (2) which is connected to the AC generator (1),
- a battery (3) which is connected to the output connections (A1, A2) of the rectifier (2),
- a polarity-reversal detector (4) which is connected to the battery (3) and comprises at least a diode and a threshold value element,
- **characterized in that** the polarity-reversal detector (4) has diodes (4a1, 4a2, 4a3) and detection elements (4c1, 4c2, 4c3), with the anode of the diode (4a1) being connected to the output (A2) of the rectifier (2) and to earth, and the cathode of the diode (4a1) being connected to the output (A1) of the rectifier (2) via the detection element (4c1) and also being connected to the anode of the diode (4a2), and the cathode of the diode (4a2) being connected to the output (A1) of the rectifier (2) via the detection element (4c2) and the anode of the diode (4a3) making contact with the said cathode of the diode (4a2), and the cathode of the diode (4a3) being connected to the output (A1) of the rectifier (2) via the detection element (4c3).

## Revendications

1. Réseau de bord d'un véhicule automobile, comprenant :
- un générateur (1) de courant alternatif,
- un redresseur (2) relié au générateur (1) de courant alternatif,
- une batterie (3) reliée aux bornes de sortie (A1, A2) du redresseur (2),
- un détecteur (4) d'inversion de polarité relié à la batterie (3), qui présente une diode (4a) et un élément de valeur de seuil raccordé en série à la diode (4a),
**caractérisé en ce que**
l'élément de valeur de seuil est au moins une diode Zener (4b).

2. Réseau de bord de véhicule automobile selon la revendication 1, **caractérisé en ce que** la diode Zener (4b) et la diode (4a) sont dimensionnées de telle sorte qu'en cas d'inversion de polarité, la diode Zener (4b) est détruite mais la diode (4a) reste intacte.

3. Réseau de bord de véhicule automobile selon la revendication 1, **caractérisé en ce que** l'élément de valeur de seuil présente plusieurs diodes Zener (4b1, 4b2, 4b3) raccordées en parallèle, ces diodes Zener (4b1, 4b2, 4b3) présentant différentes tensions Zener.

4. Réseau de bord de véhicule automobile selon la revendication 3, **caractérisé en ce que** les diodes Zener (4b1, 4b2, 4b3) et la diode (4a) sont dimensionnées de telle sorte qu'en cas d'inversion de la polarité, les diodes Zener (4b1, 4b2, 4b3) sont détruites tandis que la diode (4a) reste intacte.

5. Réseau de bord de véhicule automobile selon l'une des revendications précédentes, **caractérisé en ce que** l'élément de valeur de seuil présente une fonction de filtrage.

6. Réseau de bord de véhicule automobile selon l'une des revendications précédentes, **caractérisé en ce qu'**un élément de détection (4c) ou des éléments de détection (4c1, 4c2, 4c3) sont raccordés en série sur la diode Zener (4b) ou sur les diodes Zener (4b1, 4b2, 4b3) de l'élément de valeur de seuil.

7. Réseau de bord de véhicule automobile selon la revendication 6, **caractérisé en ce que** l'élément de détection (4c; 4c1, 4c2, 4c3) a une fonction de filtrage.

8. Réseau de bord de véhicule automobile selon l'une des revendications précédentes, **caractérisé en ce que** la diode (4a), les diodes Zener (4b, 4b1, 4b2, 4b3) et l'élément de détection ou les éléments de détection (4c; 4c1, 4c2, 4c3) sont dimensionnés de telle sorte qu'en cas d'inversion de la polarité, l'élément de détection (4c; 4c1, 4c2, 4c3) réagit et la diode (4a) et les diodes Zener (4b, 4b1, 4b2, 4b3) restent intactes.

9. Réseau de bord de véhicule automobile selon l'une des revendications précédentes, **caractérisé en ce que** l'élément de détection ou les éléments de détection (4c; 4c1, 4c2, 4c3) sont un fusible, un fil composite, une diode, un élément d'affichage chimique, un élément d'affichage optique, une piste conductrice, un élément pyrotechnique ou un élément thermique.

10. Réseau de bord de véhicule automobile selon l'une des revendications précédentes, **caractérisé en ce que** le détecteur (4) d'inversion de polarité présente un circuit série constitué de la diode (4a) et d'un circuit parallèle, le circuit parallèle présentant plusieurs branches qui sont toutes constituées d'un circuit série formé d'un élément à valeur de seuil et d'au moins un élément de détection (4c; 4c1, 4c2, 4c3), **en ce que** les éléments à valeur de seuil sont des diodes Zener (4b1, 4b2, 4b3), **en ce que** les diodes Zener (4b1, 4b2, 4b3) présentent différentes tensions Zener et **en ce que** les éléments de détection (4c; 4c1, 4c2, 4c3) ont tous une fonction de filtrage.

11. Réseau de bord de véhicule automobile selon l'une des revendications précédentes, **caractérisé en ce que** le détecteur (4) d'inversion de polarité fait partie constitutive du régulateur du générateur.

12. Réseau de bord de véhicule automobile qui présente :
- un générateur (1) de courant alternatif,
- un redresseur (2) relié au générateur (1) de courant alternatif,
- une batterie (3) reliée aux bornes de sortie (A1, A2) du redresseur (2),
- un détecteur (4) d'inversion de polarité relié à la batterie (3) qui comporte au moins une diode et un élément à valeur de seuil,
**caractérisé en ce que**
le détecteur (4) d'inversion de polarité présente des diodes (4a1, 4a2, 4a3) ainsi que des éléments de détection (4c1, 4c2, 4c3), l'anode de la diode (4a1) étant reliée à la sortie (A2) du redresseur (2) et à la masse, la cathode de la diode (4a1) étant reliée par l'intermédiaire de l'élément de détection (4c1) à la sortie (A1) du redresseur (2) et étant en outre raccordée à l'anode de la diode (4a2), la cathode de la diode (4a2) étant raccordée par l'intermédiaire de l'élément de détection (4c2) à la sortie (A1) du redresseur (2) et étant en contact avec l'anode de la diode (4a3), la cathode de la diode (4a3) étant reliée par l'intermédiaire de l'élément de détection (4c3) à la sortie (A1) du redresseur (2).
